# FASCICULE DE BREVET EUROPEEN

(11) **EP 3 515 613 B1**
(45) Date de publication et mention de la délivrance du brevet: **21.01.2026**
(21) Numéro de dépôt: 17769103.7
(22) Date de dépôt: 25.09.2017
(51) Int. Cl.: B09B 3/00, B09B 5/00, B29C 48/40

(54) **MÉTHODE DE PRODUCTION D'UN MATÉRIAU DENSIFIÉ À PARTIR D'UN FILM COMPLEXE, INSTALLATION DE PRODUCTION**
VERFAHREN ZUR HERSTELLUNG EINES VERDICHTETEN MATERIALS AUS EINER KOMPLEXEN FOLIE, HERSTELLUNGSANLAGE
METHOD FOR PRODUCING A DENSIFIED MATERIAL FROM A COMPLEX FILM, PRODUCTION INSTALLATION

(30) Priorité: 26.09.2016 FR 1659038
(43) Date de publication de la demande: 31.07.2019
(73) Titulaire: ARMOR, 44100 Nantes (FR)
(72) Inventeur: VIDALAT, Fanny, 44200 Nantes (FR); VANNIEUWENHUYSE, Nicolas, 44690 La Haye Fouassière (FR); DERENNES, Christophe, 44310 Saint Philbert de Grand Lieu (FR)
(74) Mandataire: Lavoix
(86) Numéro de dépôt international: PCT/EP2017/074159
(87) Numéro de publication internationale: WO 2018/055146

(56) Documents cités:
- WO-A1-2006/040536
- FR-A1- 2 796 879
- FR-A1- 2 870 477
- US-A1- 2006 034 961
- US-A1- 2014 027 548

## Description

La présente invention concerne la préparation, la transformation, le recyclage et l'utilisation des déchets de films complexes (à au moins deux couches), notamment ceux comportant du PET (polytéréphtalate d'éthylène, en anglais *polyethylene terephthalate)* encré.

L'invention concerne, en particulier, une méthode et une installation adaptées pour la préparation et la densification, en vue du recyclage des déchets de film PET encré issus de la fabrication de films de transfert thermique, ainsi que des rouleaux de film de transfert thermique usagés.

La technologie dite de « transfert thermique », utilisée de façon répandue et massive dans le monde, permet d'imprimer des codes à barres, des numéros de lot...etc. sur de nombreux supports (étiquettes, emballages souples...), avec une bonne qualité, de façon durable et dans tous types d'environnements. La fabrication et l'utilisation de rouleaux de film de transfert thermique comme consommables pour imprimantes de transfert thermique génèrent des chutes de productions de film de transfert thermique et des rouleaux de film de transfert thermique usagés.

Les déchets de film de transfert thermique se présentent généralement sous trois formes différentes :
- des petits rouleaux (film enroulé autour d'un mandrin en carton ou en matière plastique) de dimensions (laize, diamètre...) hétérogènes dont la laize est comprise par exemple entre 30 et 170 mm,
- des « Jumbos », i. e. des rouleaux dont la laize est par exemple de 1010 mm et le diamètre compris par exemple entre 450 et 700 mm, et
- un vrac de film.

Le film est par exemple formé d'un « Film support PET » (polytéréphtalate d'éthylène) thermoplastique représentant entre 69% et 76% en masse du film, d'une couche d'encre composée de cires, de résines et d'au moins un pigment, par exemple le noir de carbone, représentant entre 24% et 31% en masse, et d'un « dos » composé de dérivés siliconés représentant moins de 0,3% en masse. L'épaisseur du film de transfert thermique est très faible, par exemple entre 8 et 10 µm.

Les solutions de traitement actuelles pour les déchets de film de transfert thermique sont des solutions d'élimination (enfouissement) ou de valorisation énergétique. En raison de leur utilisation répandue, le recyclage des déchets de film de transfert thermique représente un enjeu économique et environnemental majeur.

Il apparaît que l'ensemble des procédés traditionnels de transformation et d'utilisation des thermoplastiques n'acceptent pas la présence de carton. Pour les déchets de film de transfert thermique sous forme de rouleaux et de « Jumbos », il est donc nécessaire de séparer les mandrins et le film. Il existe des procédés de séparation par guillotinage ou par tirage pour les rouleaux de grandes dimensions. Toutefois, il n'existe aucune solution satisfaisante techniquement et économiquement pour les rouleaux de faibles dimensions tels que les petits rouleaux précités.

Dans le cadre de ses recherches, la demanderesse a réalisé des essais de broyage des déchets de film de transfert thermique. Il s'est avéré que, pour des granulométries supérieures à 1500 µm, le broyé obtenu est très volatil et que son écoulement, par exemple dans des trémies, est problématique. Un tel produit est donc difficile à mettre en œuvre.

Il est par ailleurs connu de transformer des matériaux thermoplastiques à des températures supérieures à la température de fusion des polymères semi-cristallins ou à la température de transition vitreuse pour les polymères amorphes traditionnellement comprises entre 150 et 300°C.

Toutefois, la présence d'encres en forte proportion dans les déchets de film de transfert thermique crée des problèmes. Par exemple, les encres ressortent des interstices des équipements mis en œuvre.

Il existe par ailleurs des procédés de désencrage à l'aide de bains chimiques ou par raclage mécanique. Le but de ces procédés est d'obtenir un film PET désencré qui serait ensuite recyclé via les filières classiques de recyclage. L'inconvénient de ces procédés de désencrage est de créer de nouveaux déchets contenant les encres et des déchets liquides. De plus, les procédés utilisant des solvants ont des impacts toxicologiques et environnementaux négatifs. Les procédés de désencrage ne sont donc pas utilisés actuellement pour le traitement des déchets de film de transfert thermique, du moins pas à l'échelle industrielle. En outre, il existe à ce jour très peu d'applications pour le PET désencré obtenu.

Le document JP-A-2014124855 décrit une méthode de recyclage de rubans de transfert thermique usagés et l'utilisation des produits de recyclage obtenus comme agent colorant noir en mélange avec des matières plastiques.

Cette méthode en plusieurs étapes prévoit la séparation des films de leur support ou mandrin en carton. Les déchets de rubans récoltés sont alors introduits dans une cuve équipée d'un rotor-hélice en rotation pour réaliser une densification par eau. La matière est figée par ajout d'eau sous forme de petits granulés agglomérés. L'agglomérat subit une étape supplémentaire de micronisation pour être utilisé notamment comme agent colorant noir en mélange avec d'autres matières plastiques.

Cependant, l'étape de d'agglomération dans la cuve est réalisée par lots (en anglais *batch),* de manière discontinue. De plus, la nature des films de transfert thermique, de faible épaisseur et très fortement encrés, entrave l'étape d'agglomération. Il en résulte un aspect de charbon noir, et le dégagement d'énormément de gaz.

Il apparaît donc que les procédés existants de préparation ou transformation en vue du recyclage ne sont pas adaptés à certains types de films complexes, et notamment aux films de transfert thermique très fortement encrés et très fins.

Un but de l'invention est donc de fournir une méthode améliorée de production d'un matériau densifié directement utilisable et obtenu à partir des déchets de films complexes, notamment de transfert thermique, tout en limitant le nombre d'étapes pour inciter au recyclage, ainsi que des utilisations possibles du matériau obtenu.

A cet effet, l'invention concerne une méthode selon la revendication 1.

Selon des modes particuliers de réalisation, la méthode comprend l'une ou plusieurs des caractéristiques correspondant aux revendications 2 à 9, prise(s) selon toutes les combinaisons techniquement possibles.

L'invention concerne également une installation selon la revendication 10, et en variante selon les revendications 11 ou 12.

L'invention sera mieux comprise à la lecture de la description qui va suivre, donnée uniquement à titre d'exemple et faite en se référant aux dessins annexés, sur lesquels :
- la figure 1 est une vue schématique d'un rouleau de film de transfert thermique,
- la figure 2 est un diagramme représentant une méthode selon l'invention permettant de transformer le rouleau représenté sur la figure 1 en matériau densifié utilisable pour différentes applications,
- la figure 3 est une vue schématique d'une installation selon l'invention,
- la figure 4 est une vue schématique axiale de l'installation représentée sur la figure 3,
- la figure 5 est une vue schématique de la filière de l'extrudeuse représentée sur les figures 3 et 4, et
- les figures 6 et 7 sont des vues en perspective de granulés de matériau densifié obtenus à l'aide de l'installation représentée sur les figures 3 et 5.

### Rouleau de film de transfert thermique

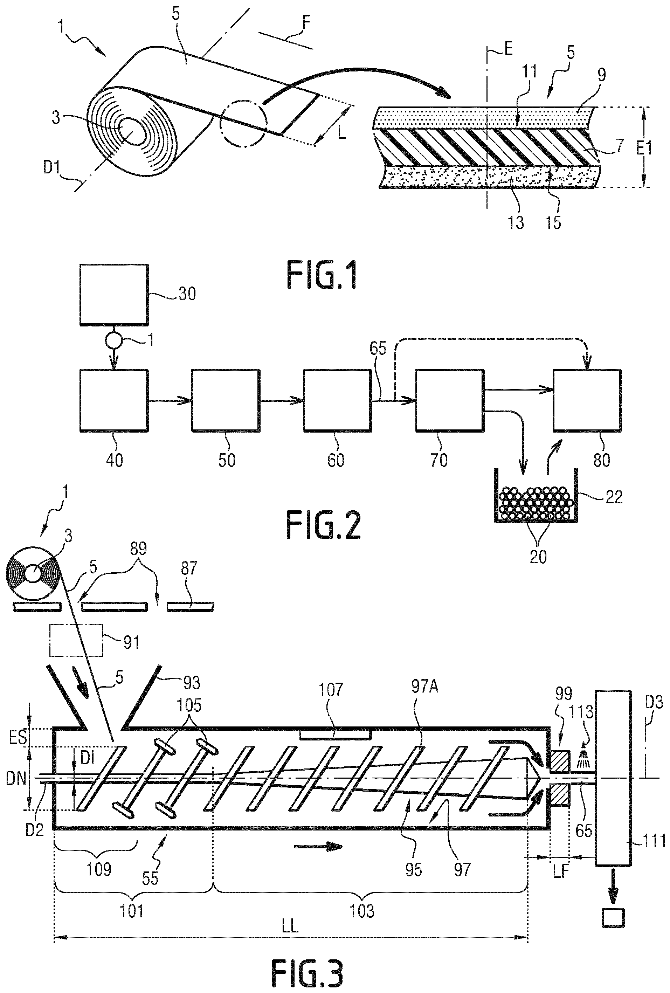

En référence à la figure 1, on décrit un rouleau 1 de film de transfert thermique. Le rouleau 1 est par exemple un « petit rouleau » au sens défini ci-dessus.

Le rouleau 1 comporte un mandrin 3 d'axe de mandrin D1 et un film 5 enroulé autour du mandrin autour de l'axe de mandrin.

Le rouleau 1 est par exemple un rouleau usagé, c'est-à-dire un rouleau dont le film a été utilisé dans une machine d'impression de transfert thermique (non représentée) et bobiné sur le mandrin 3.

Selon une variante non représentée, le rouleau 1 est un rouleau qui n'a pas servi, mais que l'on souhaite recycler. A titre d'exemple, il peut s'agir d'une chute de production issue d'un procédé de fabrication de film de transfert thermique.

Le mandrin 3 est par exemple en carton.

Le film 5 présente une laize L selon l'axe de mandrin D1, comprise par exemple entre 30 et 170 mm. Comme visible sur l'agrandissement en partie droite de la figure 1, le film 5 comprend, dans cet exemple, une première couche 7 de matière plastique, et une deuxième couche 9 disposée sur une première face 11 de la première couche.

Le film 5 est dit « complexe » car il comprend au moins deux couches de natures distinctes.

Le film 5 comprend avantageusement une troisième couche 13 disposée sur une deuxième face 15 de la première couche, la deuxième face étant opposée à la première face selon une direction E localement perpendiculaire au film.

Le film 5 présente une épaisseur E1 faible selon la direction E, inférieure à 3 mm, et préférentiellement inférieure à 10 µm.

De manière générale, on entend par « film » un objet d'aspect plat, pouvant être enroulé, et s'étendant selon une direction principale F. Par exemple, le film 5, à l'état déroulé, est au moins 50 fois plus long selon la direction principale F, que large selon l'axe de mandrin D1.

Selon des variantes non représentées, le film 5 comporte uniquement la première couche 7 et la deuxième couche 9, ou bien ces couches et au moins une autre, toutes distinctes.

La première couche 7 est en polymère ou mélange de polymères (usuellement nommé par le terme anglais *compound)* thermoplastiques, par exemple en PET.

Selon des variantes, la première couche 7 est en PEHD (polyéthylène haute densité), PEBD (polyéthylène basse densité), PP (polypropylène), EVA (copolymère éthylène - acétate de vinyle), EVOH (éthylène alcool vinylique), PVC (polychlorure de vinyle), PBT (polybutylène téréphtalate), PS (polystyrène), ABS (acrylonitrile butadiène styrène), PMMA (polyméthacrylate de méthyle), PVB (Polybutyral de vinyle), PA (Polyamide), PC (Polycarbonate), ou en PEN (poly naphtalate d'éthylène ou polyéthylène naphtalate)...

La première couche 7 représente par exemple entre 69% et 76% en masse du film 5.

La première couche 7 présente une première température de fusion T1, par exemple comprise entre 245 et 265°C pour le PET (notamment pour le film de transfert thermique).

Dans la présente demande, la notion de « température de fusion » doit s'entendre comme la température de fusion pour les polymères semi-cristallins ou, d'une façon élargie, à la température de transition vitreuse pour les polymères amorphes.

La deuxième couche 9 comprend, par exemple, une ou plusieurs cires, ou une ou plusieurs résines, et au moins un pigment ou colorant, par exemple le noir de carbone (notamment pour le film de transfert thermique).

Selon des variantes, la deuxième couche 9 comporte plusieurs encres. La deuxième couche 9 représente par exemple entre 24% et 31% en masse du film 5, avantageusement environ 30%.

La deuxième couche 9 présente une deuxième température de fusion T2 inférieure à T1 d'au moins 10°C. Dans l'exemple représenté (et notamment pour le film de transfert thermique), T2 vaut entre 40 et 90°C.

La troisième couche 13 forme un « dos » comprenant de la silicone, des dérivés siliconés ou leurs mélanges. La troisième couche 13 représente par exemple moins de 0,3% en masse du film 5.

### Méthode de production

En référence à la figure 2, on décrit une méthode de production selon l'invention.

La méthode permet de transformer des rouleaux tels que le rouleau 1 et de produire un matériau densifié se présentant sous la forme de granulés 20 de matériau densifié stockés dans un conteneur 22 en vue d'une utilisation ultérieure, ou bien directement utilisés pour différentes applications.

En variante, la méthode permet de transformer d'autres rouleaux de films complexes, ou d'autres films, tels que des films minces d'électronique organique, par exemple les films photovoltaïques organiques de troisième génération (en anglais *OPV organic photovoltaics).*

La méthode comprend une étape 30 d'obtention du rouleau 1, une étape 40 de séparation du mandrin 3 et du film 5, et une étape 50 d'alimentation d'une extrudeuse 55 représentée sur les figures 3 à 4) en film 5. La méthode comprend aussi une étape 60 de compression du film 5 pour obtenir un profilé 65 de matériau densifié, et une étape 70 optionnelle de coupe du profilé 65 pour obtenir les granulés 20 de matériau densifié.

Les étapes 30, 40 et 50 constituent ensemble une étape d'obtention du film 5.

Selon une variante, le film 5 est obtenu d'une autre façon, par exemple en vrac ou sous la forme de morceaux (non représentés). Ces morceaux sont par exemple obtenus en déchiquetant le film 5. Le déchiquetage peut être réalisé sur place, ou dans un autre lieu. Le déchiquetage est par exemple réalisé à l'aide de déchiqueteurs à rotation lente mono ou bi rotor(s), de broyeurs rapides à couteaux.

Les morceaux ont avantageusement des dimensions supérieures à 1500 µm. Selon cette variante, l'extrudeuse 55 est alimentée par ces morceaux et, à l'étape 60 de compression, ce sont ces morceaux qui sont densifiés.

La méthode comprend enfin optionnellement une étape 80 d'utilisation des granulés 20 de matériau densifié obtenus, l'utilisation étant effectué immédiatement ou ultérieurement, sur place ou dans un autre lieu.

Selon une variante, le profilé 65 de matériau densifié est envoyé directement à l'étape 80 d'utilisation sans passer par l'étape 70 de coupe, notamment si l'utilisation est locale et ne nécessite pas un stockage sous la forme des granulés 20 de matériau densifié.

### Etape 40 de séparation film - mandrin

### Pour les « petits rouleaux »

Le rouleau 1 est éventuellement préparé pour pouvoir se dérouler librement. Si nécessaire, un outil de coupe, par exemple un cutter ou un couteau, est utilisé sur la longueur de la laize L pour libérer le film 5. Ceci est réalisé manuellement, ou de manière automatisée.

A titre d'exemple, les rouleaux sont placés manuellement ou automatiquement en vrac sur une grille 87 (figure 3) définissant des passages 89 de dimensions inférieures aux dimensions du mandrin 3.

Un système d'aspiration 91, placé en dessous de la grille 87, aspire le film 5 et l'achemine jusque dans une trémie 93 de l'extrudeuse 55. L'acheminement est par exemple pneumatique.

Selon des variantes non représentées, le film 5 est attiré et déroulé par un système générant des forces électrostatiques, ou par un système d'injection ou d'aspiration d'air, tel qu'un système à canon pneumatique avantageusement placé sous la grille 87.

Selon des modes particuliers de réalisation, la grille 87 est animée de mouvements (non représentés), par rapport à l'extrudeuse 55, d'inclinaison et/ou de translation, et/ou est montée sur une table vibrante (non représentée) pour augmenter l'efficacité de la séparation.

Selon un mode particulier non représenté, la grille 87 est fermée et forme une cage autour des rouleaux pendant la séparation pour des questions de sécurité.

Lorsque le film 5 s'est complétement déroulé des rouleaux, les mandrins 3 sont écartés. Les mandrins sont par exemple évacués par un basculement de la grille 87.

Pour obtenir une alimentation continue de l'extrudeuse 55, un système tournant (non représenté) comportant plusieurs grilles indexées est avantageusement utilisé. Un tel système comprend par exemple une grille en cours de remplissage, deux grilles situées sur le système d'aspiration, et une grille pour l'évacuation des mandrins. La rotation des grilles est effectuée lorsqu'il n'y a plus que des mandrins (sans film 5) sur celle des deux grilles ayant été placée sur le système d'aspiration depuis la durée la plus longue.

Toujours afin de permettre un fonctionnement en continu, la grille en cours de remplissage est avantageusement placée sur système de pesée (non représenté) permettant d'introduire un poids relativement constant de rouleaux par grille.

Selon un autre exemple (non représenté), les rouleaux sont placés sur des dérouleurs mobiles en rotation libre autour de leur axe. Le film 5 est entraîné par la vis sans fin 95 de l'extrudeuse 55, ou par des systèmes de tirage à rouleaux ou à courroies, ou par des systèmes d'aspiration.

La vis sans fin 95 traverse un fourreau 97 défini par l'extrudeuse 55 et s'étend selon un axe de vis D2.

Avantageusement, le film 5 subit une torsion sur lui-même afin de faciliter l'incorporation dans l'extrudeuse 55.

Une autre possibilité consiste à placer les rouleaux horizontalement (en position couchée) sur un axe motorisé. L'ensemble est placé en hauteur par rapport à l'extrudeuse 55. L'axe motorisé fait tourner le rouleau 1 dans le sens de déroulement du film 5, qui tombe avantageusement par gravitation.

### Pour les « Jumbos »

Les « Jumbos » sont par exemple placés sur des dérouleurs pour dérouler le film 5.

Les « Jumbos » sont soit posés de façon sécurisée sur l'un de leur flanc, soit montés sur un axe libre en rotation, ou motorisé. Dans un souci d'augmenter la capacité d'entrée en film, plusieurs « Jumbos » sont avantageusement déroulés en même temps.

Le déroulement du film est réalisé par l'entraînement de la vis de l'extrudeuse 55, par des systèmes de tirage (système de tirage à rouleaux ou système de tirage à courroies), ou par des systèmes d'aspiration.

Dans ce dernier cas, une enceinte fermée (non représentée) dans laquelle le « Jumbo » est placé sur un axe libre (ou motorisé) en rotation est utilisée. Ceci permet le déroulement des « Jumbos » multi spires (constitués de plusieurs longueurs de film non reliées entre elles mais se trouvant enroulés sur le même mandrin) sans intervention humaine.

Le film 5 subit avantageusement une torsion sur lui-même lors de cette étape afin de faciliter l'incorporation dans l'extrudeuse 55.

### Etape 50 d'alimentation du film 5 dans l'extrudeuse 55

Par exemple, le film 5 est incorporé par gravitation dans la trémie 93 jusqu'à la vis sans fin 95 qui l'entraîne par des phénomènes de frottement.

Selon une variante, le système d'aspiration (de type transport pneumatique) achemine le film 5 jusqu'à la vis sans fin 95 qui l'entraîne par frottement.

En variante, l'alimentation est assistée par un galet bourreur (non représenté, par exemple de même type que ceux utilisés pour l'extrusion des caoutchoucs) qui aide le film 5 à pénétrer entre des filets 97A de la vis sans fin 95. Le galet bourreur tourne à la même vitesse que la vis sans fin 95, mais en sens inverse. A ce galet bourreur sont éventuellement associés deux éléments dits « racleurs-balayette » (non représentés), placés en position haute et basse et permettant d'éviter que le film 5 ne vienne s'enrouler autour du galet bourreur.

Par « haut » et « bas », on entend ici le haut et le bas de la figure à laquelle il est directement ou indirectement fait référence.

Selon un mode particulier de réalisation, l'alimentation est assistée par deux rouleaux (non représentés), mobiles en rotation et placés dans la trémie 93. Ces deux rouleaux ont des sens de rotation différents permettant d'entraîner le film 5 vers le bas et donc vers la (ou les) vis de l'extrudeuse 55. L'espace entre ces deux rouleaux est suffisamment important pour permettre le passage d'un volume conséquent de film 5. A ces rouleaux d'entraînement sont éventuellement associés des éléments accrocheurs dits « racleurs-balayette » positionnés en position haute et basse et permettant d'éviter que le film 5 ne vienne s'enrouler autour de ces rouleaux.

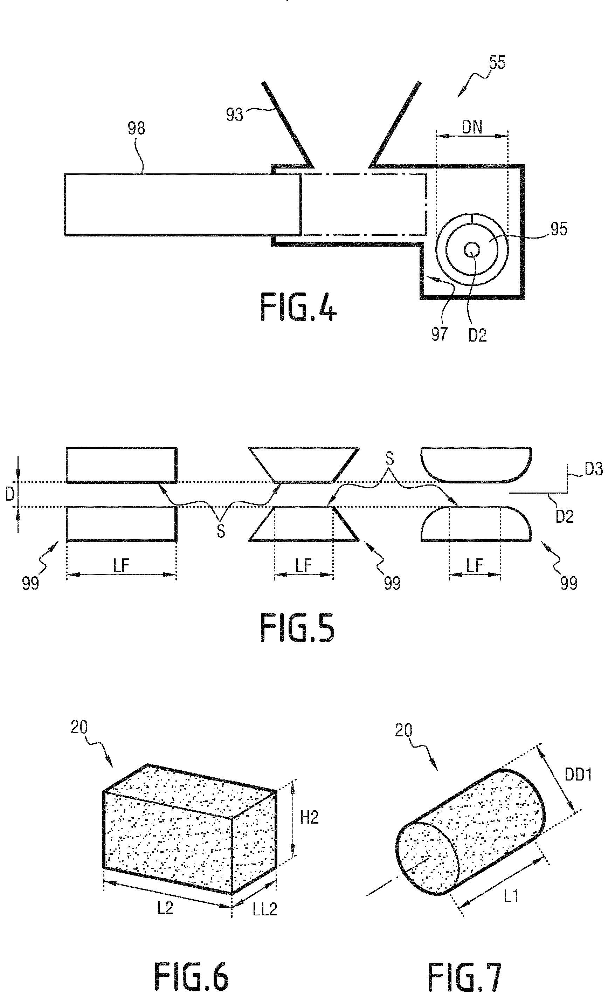

Selon un mode particulier de réalisation, l'alimentation est assistée par un tiroir 98 coulissant (figure 4), entraîné hydrauliquement et pressant le film 5 contre la vis sans fin 95. Dans ce cas, la trémie 93 ne se situe pas au-dessus de la vis sans fin 95, mais est décalée perpendiculairement à l'axe de vis D2.

Selon un autre mode de réalisation, et notamment pour du film en vrac (incorporé dans la trémie 93 via un grappin ou sous la forme de balles (obtenues lors du conditionnement préalable du film vrac par un équipement de type presses à balles) l'alimentation est assistée par un système à piston vertical (non représenté), situé au niveau de l'entrée de la trémie 93 et poussant le film 5 dans la vis sans fin 95 pour permettre une meilleure accroche du film.

Avantageusement, au niveau de la zone d'alimentation de l'extrudeuse 55, la vis sans fin 95 comporte des éléments (non représentés) permettant d'accrocher plus facilement le film 5.

Le fourreau 97 est avantageusement rainuré.

### Etape 60 de compression

Le film 5 est poussé par la vis sans fin 95 à l'intérieur du fourreau 97 selon l'axe de vis D2 vers une filière 99. Le film 5 est en outre comprimé dans l'extrudeuse 55.

Le film 5 comble progressivement l'espace initialement libre entre le fourreau 97 et la vis sans fin 95, et est comprimé dans le fourreau 97.

Dans l'exemple représenté, l'extrudeuse 55 possède une seule vis sans fin.

Selon des variantes non représentées, l'extrudeuse 55 est bi-vis co-rotatives (deux vis tournant dans le même sens), ou bis-vis contra-rotatives (deux vis tournant en sens contraire.

Optionnellement, l'extrudeuse 55 est équipée d'une ou de plusieurs zones de dégazage (non représentées).

Avantageusement, l'extrudeuse 55 est dépourvue de grille de répartition et/ou de système de filtration. Des pièces métalliques (non représentées), sous forme de bagues vides (afin de laisser passer le flux de matière), sont éventuellement placées au bout de la vis sans fin 95 en lieu et place d'une grille et/ou d'un système de filtration.

L'extrudeuse 55 possède par exemple une tête droite qui permet de faire sortir le profilé dans le prolongement de l'axe de la ou des vis D2.

Le fourreau 97 est avantageusement cylindrique.

La filière 99 est par exemple située dans le prolongement axial de la vis sans fin 95.

La vis sans fin 95 est à simple ou double filet(s). La vis sans fin 95 présente axialement une longueur LL, et un diamètre nominal DN (diamètre des filets 97A) par exemple constant suivant l'axe de vis D2. La vis sans fin 95 comprend par exemple, successivement dans le sens axial, une partie 101 dans laquelle la vis sans fin présente un diamètre interne DI constant, et une partie 103 dans laquelle le diamètre interne est croissant selon l'axe de vis D2 vers la filière 99.

Avantageusement, la vis sans fin 95 et le fourreau 97 sont séparés par une distance ES supérieure ou égale à 0,001 fois le diamètre nominal DN.

La distance ES est par exemple constante suivant l'axe de vis D2.

La partie 101 comporte par exemple des éléments coupants 105, avantageusement situés sur des extrémités radiales des filets 97A de la vis sans fin 95, et adaptés pour couper le film 5.

Les éléments coupants 105, éventuellement en association avec des contrecouteaux non représentés, permettent de déchiqueter et broyer le film 5 au cours de son convoyage.

Dans la partie 103, la hauteur et le volume du ou des filets 97A de la vis sans fin 95 diminuent.

Un apport de chaleur est optionnellement réalisé vers l'intérieur du fourreau 97 pour chauffer le film 5.

Sous l'action combinée de la vis sans fin 95 et de l'éventuel apport de chaleur, le film 5 est comprimé à travers la filière 99 pour former le matériau densifié sous la forme du profilé 65 de matériau densifié.

En variante (non représentée), l'extrudeuse 55 comporte plusieurs filières, et éventuellement plusieurs vis sans fin, et plusieurs profilés de matériau densifié sont obtenus en sortie de l'extrudeuse.

L'extrudeuse 55 est avantageusement régulée en température, par exemple au niveau du fourreau 97.

Un paramètre important est la température maximale de compression Tm à laquelle est porté le film 5 pendant l'étape 60 de compression.

Tm est inférieure à la première température de fusion T1.

En outre, il est avantageux que Tm soit comprise entre la deuxième température de fusion T2 moins 60°C et T2 plus 60°C, de préférence entre la T2 moins 35°C et T2 plus 35 °C.

Ainsi, la deuxième couche 9 se comporte avantageusement comme un liant lors de la densification aboutissant au profilé 65 de matériau densifié. Ce rôle de liant permettant d'assurer et de maintenir une cohésion du PET et donc du jonc de matériau densifié après sa sortie de la filière. La température Tm, notamment par rapport à T2, semble donc être également un paramètre permettant de jouer sur le niveau de dureté souhaité pour le jonc de matériau densifié (dureté définie ci-dessous).

Avantageusement, on définit un profil de consigne de températures du fourreau 97 et de la filière 99, en tenant en compte l'auto-échauffement lié au travail de la vis sans fin 95 et des forces de cisaillement et de frottement de la matière dans le fourreau. Le profil de consigne de température dépend des capacités en entrée de film, de la vitesse de rotation de vis et des dimensions (notamment la longueur) de l'extrudeuse selon l'axe de vis D2, et des profils de vis de l'extrudeuse.

Le fourreau 97 et/ou la filière 99 sont par exemple équipés d'un système 107 de régulation thermique permettant le chauffage et/ou le refroidissement du fourreau et/ou de la filière.

Le système 107 comporte par exemple :
- des bandes résistives chauffantes (non représentées),
- un dispositif de refroidissement par air pulsé (non représenté), et/ou
- un dispositif de régulation thermique (non représenté) par circulation de fluide (eau ou huile).

Selon une variante non représentée, la vis sans fin 95 est creuse et refroidie par de l'eau ou de l'huile.

Selon une autre variante, l'extrudeuse 55 a un fonctionnement adiabatique. Elle n'est munie d'aucun système de régulation thermique, ou bien ceux-ci ne fonctionnent que dans une phase de démarrage du procédé. Dans ce cas, la chaleur est apportée uniquement par les frottements internes à l'extrudeuse 55.

Par exemple, le profil de consigne de température est, le long de l'axe de vis D2 en allant vers la filière 99, linéaire, croissant, décroissant, croissant puis décroissant, ou décroissant puis croissant.

Selon une variante avantageuse, une zone d'alimentation 109 (première partie de la vis sans fin commençant au niveau de la trémie de l'extrudeuse 55) est refroidie, afin d'éviter les problèmes d'alimentation (par exemple des bouchons de matière dans la zone d'alimentation ou des irrégularités d'alimentation) et un refoulement du film 5 hors de l'extrudeuse.

La vitesse de rotation de la vis sans fin 95 est établie en fonction du débit de profilé 65 de matériau densifié souhaité. Toutefois, plus la vitesse de rotation de vis sans fin 95 est élevée, plus l'auto-échauffement est important, avec un risque de dépassement de la première température de fusion T1, ce risque étant moindre si des dispositifs de régulation sont utilisés.

En outre, la vitesse de rotation de la vis sans fin 95 conditionne le temps de séjour du film 5 dans l'extrudeuse 55. Selon les configurations, un temps de séjour minimum est recommandé pour conférer au profilé 65 de matériau densifié les propriétés requises. L'homme du métier saura ajuster la vitesse de rotation en fonction de ces paramètres.

La vitesse de rotation de la vis sans fin 95, lors d'une phase de remplissage du fourreau 97, est par exemple inférieure à la vitesse de rotation pendant une phase de production stabilisée. Après remplissage, la vitesse est alors augmentée plus ou moins rapidement.

Une extrudeuse bi-vis corotatives permet une régularité de l'alimentation du film 5. L'utilisation de vis coniques permet une compression du film 5 au fur et à mesure de son transport.

Selon un mode de réalisation, le rapport de la longueur LL sur le diamètre nominal DN de la vis sans fin 95 est par exemple supérieur à 35, notamment si l'extrudeuse 55 comporte un système de régulation thermique.

Selon un autre mode de réalisation, le rapport de la longueur LL sur le diamètre nominal DN est inférieur à 20, afin de limiter le temps de séjour dans l'extrudeuse 55, notamment si l'extrudeuse est dépourvue d'un système de régulation thermique ou que ce dernier est peu performant.

La filière 99 donne sa forme au profilé 65 de matériau densifié en sortie de l'extrudeuse 55.

Sur la figure 3, la filière 99 est à sortie unique (un seul orifice).

En variante (non représentée), la filière 99 possède des sorties multiples, en fonction du débit de film 5 en entrée et des dimensions de ou des orifices. La filière 99 comprend par exemple une plaque à trous cylindriques ou une plaque à lèvres (section rectangulaire perpendiculairement à l'axe de vis D2).

Par exemple, le diamètre des trous cylindriques ou les dimensions des sections rectangulaires vont de quelques millimètres à quelques centimètres pour réaliser le ou les profilés de matériau densifié.

En variante, le diamètre du ou des trous cylindriques ou les dimensions de la section rectangulaire sont compris entre quelques millimètres et plusieurs dizaines de centimètres pour une utilisation directe des profilés obtenus (sans coupe).

On définit pour la filière 99 une hauteur de compression comme étant le rapport d'une longueur LF (figure 5) de la filière selon la direction d'extrusion (confondue ici avec l'axe de vis D2) sur le diamètre D ou largeur des orifices dans une direction D3 perpendiculaire à la direction d'extrusion.

La filière 99 présente avantageusement une hauteur de compression comprise entre 1,5 et 15 permettant de choisir et d'optimiser le niveau de densification souhaité pour le matériau densifié.

Le niveau de densification fait référence au niveau de dureté du matériau densifié, c'est-à-dire à son niveau de résistance à la compression et à la cassure. Le niveau de densification souhaité n'est pas obligatoirement le plus élevé possible. En effet pour certaines applications finales, il est préférable que le matériau densifié ait une faible résistance à la compression et à la cassure.

Si la hauteur de compression est trop importante, il existe un risque que le profilé 65 de matériau densifié se dé-densifie après sa sortie de l'extrudeuse 55.

Comme visible sur la figure 5, la filière 99 présente par exemple, selon un plan parallèle à l'axe d'extrusion, un profil droit (à gauche de la figure 5), un profil chanfreiné (au centre de la figure 5) en entrée et/ou en sortie, ou un profil arrondi en entrée et/ou en sortie (à droite de la figure 5).

Avantageusement, un traitement ou un revêtement spécial (non représenté) de la surface S du ou des orifices de la filière 99 permet un meilleur glissement du profilé 65 de matériau densifié hors de la filière.

A titre d'exemple, dans certaines configurations, la filière 99 est fermée lors de la phase de remplissage l'extrudeuse 55. Toujours à titre d'exemple, la filière 99 est elle-même équipée d'un système de régulation en température (non représenté) pour réaliser un chauffage ou un refroidissement du profilé 65 en train de sortir de l'extrudeuse 55.

En variante, il est possible d'ajouter d'autres produits que le film 5 (ou les morceaux de fil) dans l'extrudeuse 55, tels que, par exemple, une ou plusieurs matières thermoplastiques, un ou plusieurs additifs liants, un ou plusieurs additifs compatibilisants, un ou plusieurs additifs anti-oxydants, un ou plusieurs additifs lubrifiants, un ou plusieurs additifs dispersants, une ou plusieurs charges minérales, une ou plusieurs charges végétales, de l'eau, ou plusieurs additifs modificateurs d'impacts, etc.

### Etape 70 de coupe

Le profilé 65 de matériau densifié est sectionné par un dispositif de coupe 111.

Le dispositif de coupe 111 comprend un outil de coupe, par exemple tournant et monté en bout de filière (coupe en tête). L'outil de coupe comprend avantageusement des couteaux rotatifs en acier dur, offrant des angles de coupe réglables. La coupe a avantageusement lieu à température ambiante grâce à un jet 113 d'air soufflé, l'air servant également à véhiculer et à refroidir les granulés 20 obtenus.

Selon une variante, des conformateurs (refroidis ou non) ou un convoyeur de refroidissement sont placés en sortie de la filière 99. Après un passage optionnel sur un refroidisseur (non représenté), le ou les profilés de matériau densifié sont incorporés dans un outil de coupe de type granulateur (par exemple broyeur-fraiseur ou scie-circulaire), pour obtenir les granulés 20.

Après la coupe, les granulés 20 de matériau densifié sont éventuellement tamisés. Les fines sont avantageusement renvoyées en entrée de l'extrudeuse 55 pour être incorporées dans le profilé 65 de matériau densifié produit.

Les granulés 20 de matériau densifié sont par exemple conditionnés en sacs pour être stockés ou transportés en vue d'une utilisation ultérieure. Les granulés 20 de matériau densifié peuvent également être stockés provisoirement dans des silos tampons.

### Le profilé 65 de matériau densifié et les granulés 20 de matériau densifié

Le profilé 65 de matériau densifié ou les granulés 20 de matériau densifié sont prêts à être incorporés facilement dans tout procédé, en tant que matière première.

On définit un profilé 65 de matériau densifié particulier de couleur noire et/ou des granulés 20 de matériau densifié particuliers de couleur noire, obtenus à partir de film de transfert thermique comportant de l'encre noire.

On définit des profilés 65 particuliers colorés (vert, rouge, jaune, bleu, blanc, ou gris notamment) et/ou des granulés 20 de matériau densifié particuliers colorés (vert, rouge, jaune, bleu, blanc, ou gris notamment) obtenus à partir de films de couleurs correspondantes.

En variante, on définit un profilé de matériau densifié floréal obtenu à partir de films de transfert thermique sans sélection préalable de couleur (les films incorporés pouvant être de toutes les couleurs possibles).

Le matériau densifié n'est pas classé comme dangereux selon la directive 1999/45/EC et est conforme à la réglementation REACH.

Les granulés 20 sont par exemple en forme de pavé (figure 6) ou de cylindre (figure 7).

Les propriétés des granulés de matériau densifié obtenus sont avantageusement sensiblement constantes.

Les propriétés principales sont données dans le tableau 1 suivant.

Les caractéristiques dimensionnelles (longueur, diamètre, largeur, dimension) sont mesurées à l'aide d'un pied à coulisse.

Les températures de fusion sont mesurées à l'aide d'analyse par calorimétrie différentielle à balayage (en anglais, *Differential Scanning Calorimetry* ou DSC). La masse volumique est la masse de matière contenue dans un volume donné comprenant le volume d'air interstitiel.

Le taux d'humidité est mesuré selon la norme EN 14346-A.

Le taux de cendre est mesuré selon la norme ISO 3451.

Le taux de fines est mesuré selon la méthode suivante. Au minimum trois échantillons de 2 kg minimum sont prélevés. Pour chacun des échantillons, la masse totale est mesurée avec une balance (précision minimum de 0,001 kg), puis les fines (ayant au minimum deux dimensions inférieures à 2 mm - mesure par un pied à coulisse) sont séparées manuellement à l'aide d'une petite pince. La masse des fines est ensuite mesurée avec la même balance et le calcul du rapport masse des fines sur masse totale est réalisé. Le taux de fines à retenir est la moyenne d'au minimum de trois résultats obtenus à partir de trois échantillons différents.

**Tableau 1**

| | **Caractéristiques** | **Valeurs** | **Unité** |
|---|---|---|---|
| Granulés 20 de matériau densifié en forme de **cylindres** | Longueur L1 | ≥ 2 | mm |
| | Diamètre DD1 | ≥ 2 | mm |
| Granulés 20 de matériau densifié en forme de **pavés** | Longueur L2 | ≥ 2 | mm |
| | Largeur LL2 | ≥ 2 | mm |
| | Hauteur H2 | ≥ 2 | mm |
| Granulés 20 de matériau densifié d'une **autre forme** | Dimension 1 | ≥ 2 | mm |
| | Dimension 2 (dans une direction perpendiculaire à celle de la dimension 1) | ≥ 2 | mm |
| Taux de fines en masse (ayant au minimum deux dimensions inférieures à 2 mm) | | < 20 | % |
| Point de fusion du PET | | 245-265 | °C |
| Taux de Cendre | | <5 | % |
| Taux d'humidité | | <3 | % |
| Masse volumique apparente (du lit de granulés 20 non tassé ou tassé) | | > 120 | kg/m3 |

### Exemple de méthode de production selon l'invention

Les rouleaux de film complexe sont des rouleaux de film de transfert thermique de laize L comprise entre 10 et 120 mm

Pour alimenter l'extrudeuse 55, le rouleau est placé sur un axe libre. Le film est déroulé et est entraîné par l'action des vis de l'extrudeuse 55.

L'extrudeuse 55 utilisée est une extrudeuse bivis (à deux vis) co-rotatives. Les vis ont une longueur inférieure à 200 mm, un diamètre nominal inférieur à 15 mm, et des profils conjugués (l'un avec l'autre) à simple filet.

La filière 99 possède une sortie unique, de section rectangulaire, et de longueur LF inférieure à 20 mm.

Les paramètres d'extrusion sont les suivants :
- vitesse de rotation de vis inférieure à 50 tour/min,
- température de consigne de chauffe du fourreau 97 inférieure à 65°C,

Pour l'étape 70 de coupe, une paire de ciseaux a été utilisée.

Les granulés 20 obtenus sont des pavés de dimensions 4 à 5 mm x 3 à 5 mm x 2 à 3 mm et d'une masse moyenne de 35 mg. Le lit de granulés 20 présente une masse volumique (apparente) moyenne comprise entre 200 et 400 kg/m³.

### Etape 80 d'utilisation du matériau densifié

Le profilé 65 de matériau densifié ou les granulés 20 de matériau densifié peuvent être utilisés, en tant que matière première, dans des applications industrielles, par exemple en mélange avec d'autres matières thermoplastiques, dans des procédés classiques de plasturgie : injection, extrusion compression, extrusion, thermoformage, compression, intrusion...etc.

Le profilé 65 de matériau densifié ou les granulés 20 de matériau densifié sont mélangés avec les autres matières et incorporés grâce à des équipements mélangeurs, par exemple des mélangeurs lents, des mélangeurs rapides, des silos mélangeurs, des mélangeurs à tonneau, des mélangeurs en V, ou grâce à des équipements doseurs, par exemple volumétriques ou gravimétriques.

### Exemple A

Les granulés 20 de matériau densifié sont utilisés en mélange avec d'autres matières thermoplastiques, par exemple des polyoléfines (PEHD, PP...). Des essais réalisés par la demanderesse ont permis de valider la faisabilité de transformation par extrusion et injection d'un mélange contenant, en masse, par exemple, 10% de granulés 20 de matériau densifié et 90% de matière polyoléfine.

Les caractéristiques du mélange de polymères (ou *compound)* obtenu (voir tableau 2 ci-dessous) sont équivalentes à celle de polyoléfines seules en termes de propriétés rhéologiques, physico-chimiques et mécaniques.

**Tableau 2 - Caractérisation du compound « granulés 20 de matériau densifié + 90% PEHD »**

| **Caractéristiques** | **10% Granulés 20 de matériau densifié + 90% PEHD** | **100% PEHD** | **Unité** | **Norme** |
|---|---|---|---|---|
| **MFI (190°C, 2.16 kg)** | 4.7±0.5 | 5.2 ± 0.5 | g/10min | ISO 1133 |
| **Taux de cendre** | ≤ 5 | ≤ 5 | % | Interne |
| **Densité** | 0.97 ± 0.02 | 0.95 ± 0.02 | g/cm³ | Interne |
| **Température de Fusion** | 125-130 | 125-130 | °C | Interne |
| **Module de Traction** | 1100 ± 200 | 1070 ± 200 | MPa | ISO 527 |
| **Contrainte maximale (Traction)** | 28 ± 3 | 27 ± 3 | MPa | ISO 527 |
| **Allongement à la rupture (Traction)** | 333 ± 50 | 355 ± 50 | % | ISO 527 |

### Exemple B

Les granulés 20 de matériau densifié sont utilisés en plasturgie en tant que mélange-maître noir (ou en tant que mélange-maître de couleur suivant les références). Les granulés 20 sont donc un mélange-maître recyclé susceptible de se substituer à des mélanges-maîtres vierges.

De nombreux essais réalisés par la demanderesse ont permis de valider cette utilisation en tant que mélange-maître noir ou coloré.

Les essais ont notamment permis de déterminer que l'ajout granulés 20 de matériau densifié de couleur noire dans une matière thermoplastique naturelle permet d'obtenir une coloration noire de qualité dès lors que les granulés représentent au moins 0,5% en masse du produit à colorer.

### Autres exemples

Par exemple, les granulés 20 de matériau densifié (ou le profilé 65 de matériau densifié) peuvent être utilisés en plasturgie comme charge au sein d'une matrice thermoplastique mise en forme par injection, extrusion compression, extrusion, thermoformage, compression, intrusion, etc...

Selon un autre exemple, les granulés 20 de matériau densifié (ou le profilés 65 de matériau densifié) sont utilisés en plasturgie comme additifs dans un mélange de thermoplastiques initialement peu ou non compatibles de façon à améliorer la compatibilité des composants du mélange entre eux. A titre d'illustration, des essais ont montré que les granulés 20, grâce aux encres qu'ils contiennent, améliorent la compatibilité entre le PEHD et PET d'un facteur 10 par rapport à un mélange sans cet additif.

Selon un autre exemple, les granulés 20 de matériau densifié (ou le profilé 65 de matériau densifié) sont utilisés en plasturgie pour modifier la viscosité au sein d'une matrice thermoplastique mise en forme par injection, extrusion compression, extrusion, thermoformage, compression, intrusion, ...etc.

Selon un autre exemple, les granulés 20 de matériau densifié (ou le profilé 65 de matériau densifié) sont utilisés comme charges ou matières premières au sein d'une matrice thermodurcissable (par exemple mise en forme par compression, ou par moulage par injection RIM), d'une matrice élastomère ou d'une matrice à base de caoutchouc.

Selon un autre exemple, les granulés 20 de matériau densifié (ou le profilé 65 de matériau densifié) sont utilisés dans d'autres secteurs comme :
- charges ou matières premières lors de la fabrication de béton, ciments, enrobés, bitumes, produits céramiques,... etc,
- matières premières dans la fabrication d'isolants thermiques ou acoustiques,
- matériaux de comblement ou de remplissage d'espaces vides, ou
- matière premières dans la fabrication de produits de calage.

Selon un dernier exemple, les granulés 20 de matériau densifié (ou le profilé 65 de matériau densifié) sont utilisés en plasturgie comme agents démoulants au sein d'une matrice thermoplastique mise en forme par injection, extrusion compression, extrusion, thermoformage, compression, intrusion... etc.

### Avantages

Grâce aux caractéristiques décrites ci-dessus, l'invention fournit une méthode améliorée de production de matériau densifié directement utilisable sous la forme de granulés 20 de matériau densifié ou d'un ou plusieurs profilés de matériau densifié à partir de déchets de films complexes et notamment de film de transfert thermique, tout en limitant le nombre d'étapes pour inciter au recyclage, ainsi que des utilisations possibles du matériau densifié obtenu.

Grâce à l'utilisation d'au moins une vis sans fin, il est possible, selon un mode de réalisation avantageux, d'alimenter l'extrudeuse 55 directement par le film 5, sans déchiquetage/broyage préalable. Il est en outre possible d'incorporer directement le profilé 65 de matériau densifié dans les procédés d'application finale sans l'étape 70 de coupe préalable.

La méthode selon l'invention permet de transformer et d'utiliser des films présentant un taux d'encres très élevé, même lorsque les déchets encrés sont mis en œuvre seuls, et permet par exemple que ces encres servent de liants lors de l'étape de compression.

Dans le cadre de ses recherches, la demanderesse a testé des utilisations des granulés 20 de matériau densifié ou du profilé 65 de matériau densifié obtenus, en mélange avec d'autres matières thermoplastiques. Il s'est avéré, par exemple, que la transformation était techniquement faisable lorsque le matériau densifié, dans une granulométrie adéquate, est mélangé avec d'autres matières thermoplastiques.

La méthode est particulièrement adaptée aux déchets de films de transfert thermique (présence de mandrins carton, épaisseur du film très faible, film fortement encré).

Les étapes de séparation des mandrins des rouleaux, de compression, d'éventuelle coupe et d'utilisation du matériau densifié obtenu en tant que matière première dans une application finale peuvent être avantageusement réalisées sur une même ligne de production.

Les granulés 20 de matériau densifié présentent une granulométrie et une masse volumique apparente facilitant leur conditionnement, leur transport et leur mise en œuvre dans les procédés de transformation classiques du secteur de la plasturgie (injection, extrusion...).

Le matériau densifié est utilisable dans de nombreuses applications, notamment en mélange dans des matières polyoléfines ou dans d'autres matières thermoplastiques sans perte de propriétés, à des taux d'incorporation allant jusqu'à 10% en masse de matériau densifié, ou en tant que mélange-maître noir, ou coloré, recyclé pouvant se substituer à des mélanges-maîtres vierges.

## Revendications

1. Méthode de production d'un matériau densifié, la méthode comprenant au moins les étapes suivantes :
- obtention d'un film (5) comportant au moins une première couche (7) de matière plastique, et une deuxième couche (9) de composition distincte de la première couche, la première couche (7) possédant une première température de fusion (T1), ou obtention de morceaux d'un tel film (5), la deuxième couche (9) possédant une deuxième température de fusion (T2) inférieure à la première température de fusion (T1) d'au moins 10°C,
- compression du film (5) obtenu ou des morceaux de film (5) obtenus, dans un fourreau (97) et à travers au moins une filière (99) d'au moins une extrudeuse (55), et obtention d'au moins un profilé (65) de matériau densifié, l'extrudeuse (55) comportant au moins une vis sans fin (95) rotative pour pousser le film (5) obtenu ou les morceaux de film (5) obtenus selon un axe de vis (D2) par rapport à l'extrudeuse (55), le film (5) obtenu ou les morceaux de film (5) obtenus comblant progressivement l'espace initialement libre entre le fourreau (97) et la vis sans fin (95), et
- coupe optionnelle du profilé (65) pour obtenir des granulés (20) de matériau densifié,
l'étape de compression étant réalisée à une température maximale de compression (Tm) du film (5) obtenu ou des morceaux de film (5) obtenus, la température maximale de compression (Tm) étant inférieure à la première température de fusion (T1).

2. Méthode selon la revendication 1, dans laquelle la première couche (7) est du PET.

3. Méthode selon la revendication 1 ou 2, dans laquelle la deuxième couche (9) est de l'encre.

4. Méthode selon l'une quelconque des revendications 1 à 3, dans laquelle la température (Tm) de l'étape de compression est comprise entre la deuxième température de fusion (T2) moins 60°C et la deuxième température de fusion (T2) plus 60°C, de préférence comprise entre la deuxième température de fusion (T2) moins 35°C et la deuxième température de fusion (T2) plus 35°C.

5. Méthode selon l'une quelconque des revendications 1 à 4, dans laquelle la vis sans fin (95) comporte :
- au moins un élément coupant (105) pour couper le film (5) obtenu ou les morceaux de film (5) obtenus, et/ou
- au moins une partie (103) dans laquelle la vis sans fin (95) possède un diamètre interne (DI) perpendiculairement à l'axe de vis (D2), le diamètre interne (DI) étant croissant selon l'axe de vis (D2) pour comprimer, lors de l'étape de densification, le film (5) obtenu ou les morceaux de film (5) obtenus.

6. Méthode selon l'une quelconque des revendications 1 à 5, dans laquelle la vis sans fin (95) fait partie d'un système à deux vis coniques de l'extrudeuse (55).

7. Méthode selon l'une quelconque des revendications 1 à 6, dans laquelle la filière (99) possède une hauteur de compression comprise entre 1,5 et 15.

8. Méthode selon l'une quelconque des revendications 1 à 7, dans laquelle l'extrudeuse (55) définit un fourreau (97) traversé par la vis sans fin (95), la vis sans fin (95) ayant un diamètre nominal (DN), et des filets (98) séparés du fourreau (97) d'une distance (ES) supérieure ou égale à 0,001 fois le diamètre nominal (DN).

9. Méthode selon l'une quelconque des revendications 1 à 8, comprenant en outre les étapes suivantes :
- obtention du film (5) par déroulement d'un rouleau (1), le déroulement étant réalisé par une aspiration du film (5) ou par ou un entraînement direct du film (5) par la vis sans fin (95), et
- alimentation continue de l'extrudeuse (55) en le film (5).

10. Installation de production d'un matériau densifié, l'installation comprenant :
- une source d'un film (5) ou de morceaux de film (5), le film (5) comportant au moins une première couche (7) de matière plastique, et une deuxième couche (9) de composition distincte de la première couche (7), la première couche (7) possédant une première température de fusion (T1), la deuxième couche (9) possédant une deuxième température de fusion (T2) inférieure à la première température de fusion (T1) d'au moins 10°C,
- au moins une extrudeuse (55) adaptée pour comprimer le film (5) ou les morceaux de film (5), l'extrudeuse (55) comportant un fourreau (97), et au moins une filière (99) de sortie d'au moins un profilé (65) de matériau densifié, et au moins une vis sans fin (95) rotative pour pousser le film (5) ou les morceaux de film (5) selon un axe de vis (D2) par rapport à la filière (99), l'extrudeuse (55) étant adaptée pour réaliser la compression dans le fourreau (97) et à travers la filière (99) à une température maximale de compression (Tm) du film (5) ou des morceaux de film (5), la température maximale de compression (Tm) étant inférieure à la première température de fusion (T1), et
- optionnellement au moins un dispositif de coupe (111) adapté pour produire des granulés (20) de matériau densifié à partir du profilé (65).

11. Installation selon la revendication 10, dans laquelle la première couche (7) est du PET.

12. Installation selon la revendication 10 ou 11, dans laquelle la deuxième couche (9) est de l'encre.

## Patentansprüche

1. Verfahren zur Herstellung eines verdichteten Materials, das Verfahren umfassend mindestens die folgenden Schritte:
- Erlangen eines Films (5), umfassend mindestens eine erste Schicht (7) aus Kunststoff und eine zweite Schicht (9) mit einer von der ersten Schicht verschiedenen Zusammensetzung, wobei die erste Schicht (7) eine erste Schmelztemperatur (T1) besitzt, oder Erlangen von Stücken eines solchen Films (5), die zweite Schicht (9) eine zweite Schmelztemperatur (T2) besitzt, die um mindestens 10 °C niedriger ist als die erste Schmelztemperatur (T1),
- Verdichten des erlangten Films (5) oder der erlangten Filmstücke (5) in einer Hülse (97) und durch mindestens eine Düse (99) von mindestens einem Extruder (55) und Erlangen von mindestens einem Profil (65) aus verdichtetem Material, der Extruder (55) umfassend mindestens eine drehbare Endlosschnecke (95), um den erlangten Film (5) oder die erlangten Filmstücke (5) entlang einer Schneckenachse (D2) in Bezug auf den Extruder (5'5) zu schieben, wobei der erlangte Film (5) oder die erlangten Filmstücke (5) den anfänglich freien Raum zwischen der Hülse (97) und der Endlosschnecke (95) allmählich ausfüllen, und
- optional Schneiden des Profils (65), um Granulat (20) aus verdichtetem Material zu erlangen,
wobei der Verdichtungsschritt bei einer maximalen Verdichtungstemperatur (Tm) des erlangten Films (5) oder der erlangten Filmstücke (5) durchgeführt wird, wobei die maximale Verdichtungstemperatur (Tm) niedriger ist als die erste Schmelztemperatur (T1).

2. Verfahren nach Anspruch 1, wobei die erste Schicht (7) PET ist.

3. Verfahren nach Anspruch 1 oder 2, wobei die zweite Schicht (9) Tinte ist.

4. Verfahren nach einem der Ansprüche 1 bis 3, wobei die Temperatur (Tm) des Verdichtungsschritts zwischen der zweiten Schmelztemperatur (T2) minus 60 °C und der zweiten Schmelztemperatur (T2) plus 60 °C liegt, vorzugsweise zwischen der zweiten Schmelztemperatur (T2) minus 35 °C und der zweiten Schmelztemperatur (T2) plus 35 °C.

5. Verfahren nach einem der Ansprüche 1 bis 4, wobei die Endlosschnecke (95) Folgendes umfasst:
- mindestens ein schneidendes Element (105) zum Schneiden des erlangten Films (5) oder der erlangten Filmstücke (5), und/oder
- mindestens einen Teil (103), in dem die Schnecke (95) einen Innendurchmesser (DI) senkrecht zu der Schneckenachse (D2) besitzt, wobei der Innendurchmesser (DI) entlang der Schneckenachse (D2) zunimmt, um während des Verdichtungsschritts den erlangten Film (5) oder die erlangten Filmstücke (5) zu verdichten.

6. Verfahren nach einem der Ansprüche 1 bis 5, wobei die Endlosschnecke (95) Teil eines konischen Doppelschneckensystems des Extruders (55) ist.

7. Verfahren nach einem der Ansprüche 1 bis 6, wobei die Düse (99) eine Verdichtungshöhe zwischen 1,5 und 15 aufweist.

8. Verfahren nach einem der Ansprüche 1 bis 7, wobei der Extruder (55) eine Hülse (97) definiert, durch die die Endlosschnecke (95) verläuft, die Endlosschnecke (95) einen Nenndurchmesser (DN), und Gewindegänge (98), die von der Hülse (97) um einen Abstand (ES) getrennt sind, der größer als oder gleich wie das 0,001-fache des Nenndurchmessers (DN) ist, aufweist.

9. Verfahren nach einem der Ansprüche 1 bis 8, ferner umfassend die folgenden Schritte:
- Erhalten des Films (5) durch Abwickeln von einer Rolle (1), wobei das Abwickeln durch ein Ansaugen des Films (5) oder durch oder einen direkten Antrieb des Films (5) durch die Endlosschnecke (95) erfolgt, und
- kontinuierliche Zuführung des Films (5) zu dem Extruder (55).

10. Herstellungsanlage eines verdichteten Materials, die Anlage umfassend:
- eine Quelle für einen Film (5) oder Stücke eines Films (5), der Film (5) umfassend mindestens eine erste Schicht (7) aus Kunststoff und eine zweite Schicht (9) mit einer von der ersten Schicht (7) verschiedenen Zusammensetzung, wobei die erste Schicht (7) eine erste Schmelztemperatur (T1) besitzt, die zweite Schicht (9) eine zweite Schmelztemperatur (T2) besitzt, die um mindestens 10 °C niedriger ist als die erste Schmelztemperatur (T1),
- mindestens einen Extruder (55), der angepasst ist, um den Film (5) oder die Filmstücke (5) zu verdichten, der Extruder (55) umfassend eine Hülse (97) und mindestens eine Düse (99) zum Austreten mindestens eines Profils (65) aus verdichtetem Material, und mindestens eine drehbare Endlosschnecke (95), um den Film (5) oder die Filmstücke (5) entlang einer Schneckenachse (D2) in Bezug auf die Düse (99) zu schieben, wobei der Extruder (55) angepasst ist, um das Verdichten in der Hülse (97) und durch die Düse (99) bei einer maximalen Verdichtungstemperatur (Tm) des Films (5) oder der Filmstücke (5) durchzuführen, wobei die maximale Verdichtungstemperatur (Tm) niedriger ist als die erste Schmelztemperatur (T1), und
- optional mindestens eine Schneidevorrichtung (111), die angepasst ist, um Granulat (20) aus verdichtetem Material aus dem Profil (65) zu erzeugen.

11. Anlage nach Anspruch 10, wobei die erste Schicht (7) PET ist.

12. Anlage nach Anspruch 10 oder 11, wobei die zweite Schicht (9) Tinte ist.

## Claims

1. A method for producing a densified material, wherein the method comprises at least the following steps:
- obtaining a film (5) comprising at least a first layer (7) of plastic material, and a second layer (9) of a composition that is distinct from the first layer, wherein the first layer (7) has a first melting temperature (T1), or obtaining pieces of such a film (5), the second layer (9) having a second melting temperature (T2) lower than the first melting temperature (T1) by at least 10°C,
- compressing the film (5) or pieces of film (5) so obtained, in a sheath (97) and through at least one die (99) of at least one extruder (55), and obtaining at least one section (65) of densified material, wherein the extruder (55) comprises at least one rotary worm screw (95) for pushing the film (5) or the pieces of film (5) obtained along a screw axis (D2) relative to the extruder (55), the obtained film (5) or pieces of film (5) progressively filling the initially free space between the sheath (97) and the worm screw (95), and
- optional cutting of the section (65) to obtain granules (20) of densified material,
wherein the compression step is performed at a maximum compression temperature (Tm) of the film (5) or pieces of film (5) so obtained, wherein the maximum compression temperature (Tm) is lower than the first melting temperature (T1).

2. The method according to claim 1, wherein the first layer (7) is PET.

3. The method according to claim 1 or 2, wherein the second layer (9) is ink.

4. The method according to any one of claims 1 to 3, wherein the temperature (Tm) of the compression step is between the second melting temperature (T2) minus 60°C and the second melting temperature (T2) plus 60°C, preferably between the second melting temperature (T2) minus 35°C and the second melting temperature (T2) plus 35°C.

5. The method according to any one of claims 1 to 4, wherein the worm screw (95) comprises:
- at least one cutting element (105) for cutting the film (5) or the pieces of film (5) so obtained, and/or
- at least a portion (103) in which the worm screw (95) has an internal diameter (DI) perpendicular to the screw axis (D2), the internal diameter (DI) increasing along the screw axis (D2) for compressing, during the densification step, the film (5) or the pieces of film (5) so obtained.

6. The method according to any one of the claims 1 to 5, wherein the worm screw (95) is part of a system of the extruder (55) with two conical screws.

7. The method according to any one of the claims 1 to 6, wherein the die (99) has a compression height of between 1.5 and 15.

8. The method according to any one of the claims 1 to 7, wherein the extruder (55) defines a sheath (97) traversed by the worm screw (95), wherein the worm screw (95) has a nominal diameter (DN), and threads (98) separated from the sheath (97) by a distance (ES) greater than or equal to 0.001 times the nominal diameter (DN).

9. The method according to any one of the claims 1 to 8, further comprising the steps of:
- obtaining the film (5) by unwinding a roll (1), wherein the unwinding is carried out through suction of the film (5) or by direct drive of the film (5) by the worm screw (95), and
- continuous feeding of the extruder (55) with the film (5).

10. A plant for producing a densified material, wherein the plant comprises:
- a source of a film (5) or pieces of film (5), wherein the film (5) comprises at least a first layer (7) of plastic material, and a second layer (9) of a composition that is distinct of the first layer (7), the first layer (7) having a first melting temperature (T1), the second layer (9) having a second melting temperature (T2) lower than the first melting temperature (T1) by at least 10°C,
- at least one extruder (55) that is designed to compress the film (5) or the pieces of film (5), wherein the extruder (55) comprises a sheath (97), and at least one exit die (99) for at least one section (65) of densified material, and at least one rotary worm screw (95) for pushing the film (5) or pieces of film (5) along a screw axis (D2) with respect to the die (99), wherein the extruder (55) is designed to effect compression in the sheath (97) and through the die (99) at a maximum compression temperature (Tm) of the film (5) or pieces of film (5), wherein the maximum compression temperature (Tm) is lower than the first melting temperature (T1), and
- optionally at least one cutting device (111) designed to produce granules (20) of densified material from the section (65).

11. The plant according to claim 10, wherein the first layer (7) is PET.

12. The plant according to claim 10 or 11, wherein the second layer (9) is ink.
